# EUROPEAN PATENT APPLICATION

(11) **EP 1 257 022 A2**
(43) Date of publication of application: **13.11.2002**
(21) Application number: 02009483.5
(22) Date of filing: 25.04.2002
(51) Int. Cl.: H01S 3/094, H01S 3/067

(54) **Laser amplifier**

(30) Priority: 27.04.2001 JP 2001132815
(71) Applicant: NEC CORPORATION, Tokyo (JP)
(72) Inventor: Kasamatsu, Tadashi, Minato-ku, Tokyo (JP)
(74) Representative: Glawe. Delfs. Moll

(57) **Abstract**

A laser amplifier includes an amplification fiber main line (10), a first light source (1) and a second light source (3). The amplification fiber main line transfers signal light. Amplification medium is doped in a core of the amplification fiber main line. The signal light is amplified with laser light generated in response to transition of electrons from at least an upper laser level to a lower laser level in the amplification medium. The first light source generates first excitation light which is supplied to the amplification fiber main line for the amplification of the signal light. The first excitation light is used to excite the electrons from levels lower than the lower laser level to the upper laser level. The second light source generates second excitation light which is supplied to the amplification fiber main line for the amplification of the signal light. The second excitation light is used to excite the electrons from the lower laser level to the upper laser level.

## Description

### Background of the Invention

### 1. Field of the invention

The present invention relates to a laser amplifier, and more particularly to a laser amplifier which re-amplifies 1.65-µm laser light in an optical fiber.

### 2. Description of the Related Art

For wide band communication, an optical fiber network is being installed in a large scale. To allow the long distance transmission of data signal light, self-amplification in the optical fiber is needed. The technology of manufacturing an optical fiber itself has been established, and the wavelength of the laser light or induction radiation amplification light is almost determined.

Erbium element (Er) is proper as an amplification medium which generates laser light for amplification. An erbium added optical fiber amplifier is extensively used at present in which erbium is added to a core of a glass fiber. The erbium added optical fiber amplifier carries out an amplification operation in a 1.55-µm band (1.53 to 1.57 µm) and a 1.58-µm band (1.57 to 1.61 µm) of the low loss band of 1.45 to 1.65 µm in a quartz single mode fiber as a transmission path. In EDFA using the quartz system fiber in which the main component of the host glass is quartz, and a high efficiency amplification operation or an oscillation operation have been not observed in a range other than them.

In recent years, it is demanded that the fiber amplifier gain band is made wide, and to cope with the increase of a total transmission capacity, the transmission wavelength band of the optical communication is increasingly expanding more. Some reports are known about the optical communication in a 1.65-µm band of 1.61 to 1.65µm. However, any proof result of the fiber amplifier to which performances such as efficiency, gain, easiness of the fiber manufacturing, and reliability are required has been not reported.

A technique was reported in IEEE, Photonics Technology Letters (Vol. 8, No. 3, (1996), pp. 349 to 351), in which Terbium (Tb) is added to a clad in a fiber amplifier which has thulium (Tm) added fluoride glass as a main component, a peak portion in the neighborhood of 1.85 µm by the induced emission transition of ³F₄ → ³H₆ is absorbed by the clad, and only the induced emission in a 1.65-µm band on the shorter wavelength side is left. In this way, the gain equal to or more than 25 dB is achieved in the band of 1.65 to 1.67 µm. Such an amplifier has a low efficiency (0.22%), even if it is taken into account that the amplifier structure is not optimized. Considering that a noise figure is not reported, extra additional Tb is introduces into the clad, and an almost part of the emitting light energy is absorbed, the total light/light conversion efficiency is estimated to be low severely, compared with EDFA. The development stage does not cross a theoretical proof level.

Also, a report is known in IEEE Photonics Technology Letters (Vol. 2, No. 6, (1990), pp. 422 - 424), in which the gain of 2 dB is realized at a 1.69-µm band by using a quartz glass fiber in which thulium is added. However, it is far from the requested performance of the relay amplifier in the actual communication system. Besides, there are proposed a 1.65-µm band amplification simulation using chalgogenide glass with praseodymium (Pr) added (European Conference On Optical Communication, ECOC 2000, Post-Deadline papers PD-1) and an amplifier using a Raman amplifier (The Institute of Electronics, Information and Communication engineers, communication society in 2000, No. B-10-114). However, they do not reach a practical step.

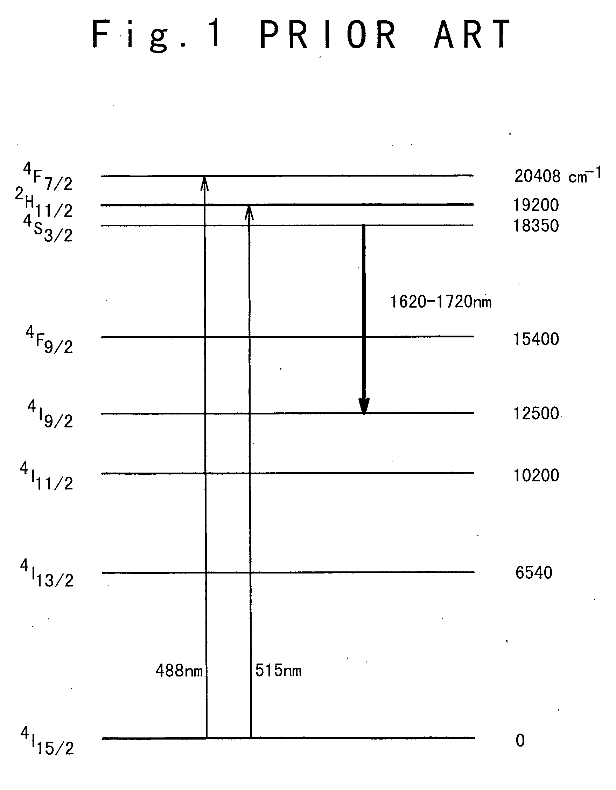

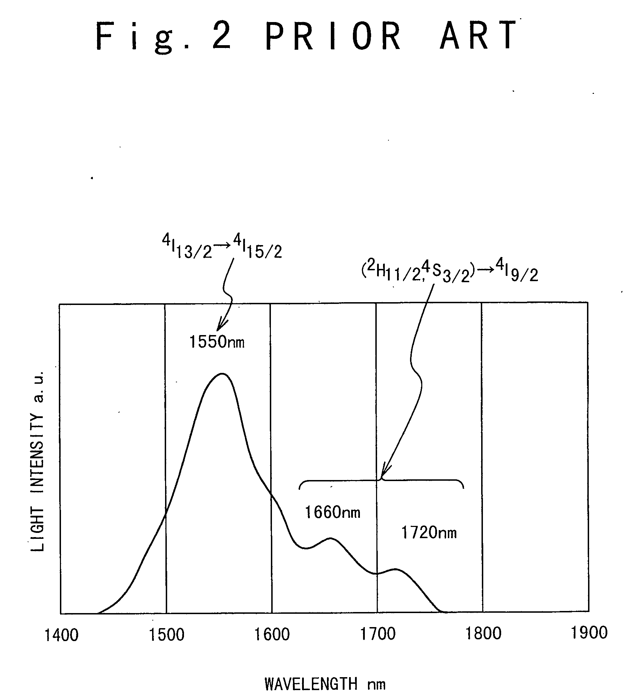

On the other hand, through the research of the fluorescence spectrum characteristic of rare earth kind ion, the spectrum of the light which is radiated between the level ²H_{11/2} or ⁴S_{3/2} and the level ⁴I_{9/2} in the Er ion in fluoride glass has the spectrum which spreads to a band of 1620 to 1720 nm is known (IEEE, the Electronics Letters (Vol. 26, No. 10, (1990), pp. 649 - 651). Fig. 1 shows the energy levels of Er ion in the fluoride glass, and excitation, and induced emission transition. Fig. 2 shows fluorescence spectrum. It should be noted that the two levels of ⁴S_{3/2} and ²H_{11/2} has the energy difference about 830 cm⁻¹, and it is about 4 times more than normal temperature thermal energy (210 cm⁻¹). Therefore, it could be considered that they in a thermally strong combination state.

The transition of Er belongs to a self-terminating system in which the upper level lifetime is shorter than the lower level lifetime. As described in the report, it is fact that the lifetime in the upper level ⁴S_{3/2} is 0.5 msec, but the lifetime of the lower level ⁴I_{9/2} is 1 msec. In this case, even if light excitation is carried out by a continuation oscillation laser, it is difficult to form an inverted population continuously between the levels. For this reason, only a pulse operation was observed. A green blue light source (for example, argon ion laser with the wavelength of 488 nm or 514.5 nm) was used as the excitation light source to excite to the upper level. However, such an apparatus has a low efficiency and a large size and is not in practical. The amplification of the data transmission laser light in the optical fiber must be continuous. A technique is known in Japanese Laid Open Patent Application (JP-P2001-7426A) in which the inverted population is achieved in a high efficiency. Such a conventional technique realizes the effective use of the excitation energy by avoiding the up-conversion due to the 2 excitation lights.

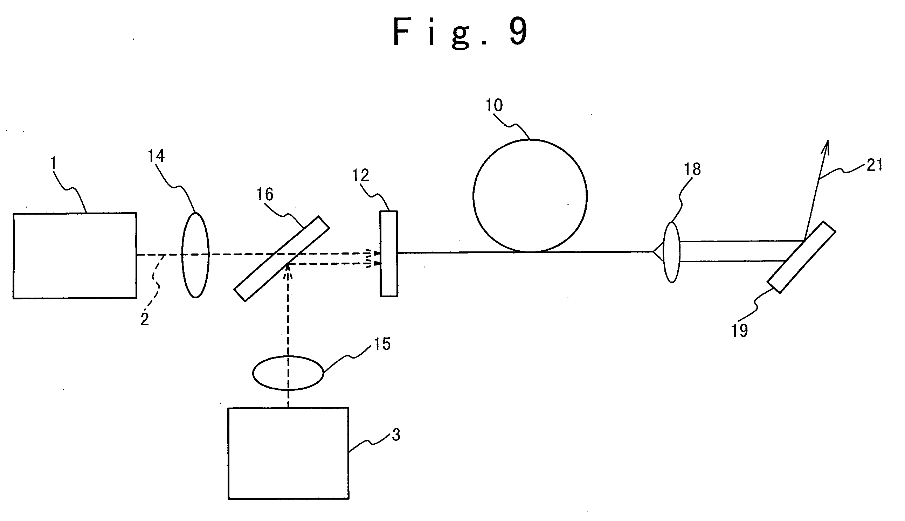

The emitted light with the wavelength of 1660 nm or 1720 nm shown in Fig. 2 belongs to the self-terminating system. It is common sense that it is theoretically difficult to expect its laser amplification. However, for the signal amplification, any method is not found out other than a method using 1660 nm or 1720 nm (the transition ⁴S_{3/2} → ⁴I_{9/2} in Fig. 9). If it is a self-terminating system even if a promising candidacy is found out in addition to this level, there is the same difficulty.

It is demanded that the technique of the light excitation is established that the transition belonging to the self-terminating system is continuous in the optical waveguide. Especially, it is demanded that such continuous induction amplification is realized in the optical fiber. Moreover, it is demanded that the technique for realizing continuous induction amplification in the 1.65-µm band of the glass fiber that erbium is added as a gain medium. Moreover, it is important that the excitation light used for the light amplification can be emitted from a semiconductor laser to simplify an optical system.

In conjunction with the above description, an amplification optical fiber is disclosed in Japanese Laid Open Patent application (JP-A-Heisei 8-152531). In the amplification optical fiber of the reference, a core contains activated ions Tm, and a clad layer contains at least one kind of ions of Ho, Eu, Tb, Nd, Dy and Sm. Or, the core contains activated ions Tm, and at least one kind of ions of Ho, Eu, Tb, Nd, Dy, and Sm. The optical fiber amplifier is comprised of the amplification optical fiber (10) and an optical fiber (2) for a signal. A WDM fiber coupler (4) synthesizes excitation light from an excitation light source (3) and 1.65-µm light as signal light. The optical fiber amplifier is further comprised of an optical isolator (5), a signal light output optical fiber (6), and high Δn quartz fibers (7A and 7B) for improving the connection of a quartz fiber and a fluoride glass fiber. Thus, the amplification optical fiber with Tm added is provided to realize high efficiency light amplification in a 1.65-µm band.

Also, a light amplifier in a 1.4 to 1.52-µm band is disclosed in Japanese Laid Open Patent Applications (JP-P2001-7426A) and (JP-P2001-24263A). In this reference, the light amplifier is comprised of an excitation light source, a synthesizing and branching filter, an optical waveguide. A core section of the amplification optical waveguide contains Tm. The excitation is carried out using two kinds of light with different wavelengths, that is, at least one is selected from the wavelength range of 1.0 to 1.2 µm and the other is selected from the wavelength range of 0.75 to 0.85 µm or 0.65 to 0.75 µm. The core section is selected from the group consisting of halide oxide glass, halide glass, chalgogenide glass, chalcohalide glass, telluride glass, bismuthate glass, germanate glass, gallium acid salt glass.

### Summary of the Invention

Therefore, an object of the present invention is to provide a laser amplifier, in which the transition belonging to the self-terminating system is continuous in an optical waveguide.

Another problem of the present invention is to provide a laser amplifier, in which continuous induction amplification can be realized in an optical fiber.

Still another problem of the present invention is to provide a laser amplifier, in which continuous induction amplification in a 1.65-µm band can be realized in a glass fiber with erbium used as a gain medium.

Yet still another problem of the present invention is to provide a laser amplifier, in which light emitted from a semiconductor laser can be used as excitation light for light amplification.

In an aspect of the present invention, a laser amplifier includes an amplification fiber main line, a first light source and a second light source. The amplification fiber main line transfers signal light. Amplification medium is doped in a core of the amplification fiber main line. The signal light is amplified with laser light generated in response to transition of electrons from at least an upper laser level to a lower laser level in the amplification medium. The first light source generates first excitation light which is supplied to the amplification fiber main line for the amplification of the signal light. The first excitation light is used to excite the electrons from levels lower than the lower laser level to the upper laser level. The second light source generates second excitation light which is supplied to the amplification fiber main line for the amplification of the signal light. The second excitation light is used to excite the electrons from the lower laser level to the upper laser level.

It is desirable that the first excitation light has energy to excite the electrons from a base level of the lower level to the upper laser level in 2-step transition.

In this case, the 2-step transition may include first step transition between the base level and a middle level which is lower than the lower laser level; and second step transition between the middle level and the upper laser level. At this time, it is desirable that the first excitation light has a wavelength in a 0.98-µm band.

Also, the 2-step transition may include first step transition between the base level and a first middle level lower than the lower laser level; non-radiation relaxation from the first middle level to a second middle level lower than the first middle level; and second step transition from the second middle level to the upper laser level. At this time, it is desirable that the first excitation light has a wavelength in a 0.8-µm band.

Also, it is desirable that the wavelength of the second excitation light is in a range of 1.45 µm to 1.61 µm. The second excitation light may excite electrons from a base level of the lower levels to a middle level of the lower levels, and induced emission from the middle level to the base level enhances the transition of the electrons from the lower laser level to the upper laser level.

Also, the core of the amplification medium main line may be formed of material selected from the group consisting of halide oxide glass, halide glass, chalgogenide glass, chalcohalide glass, telluride glass, quartz, and fluoride glass. Especially, it is desirable that the core is formed of fluoride glass. Also, it is desirable that the amplification medium is erbium or indium.

Also, the amplification medium main line may include erbium doped fluorozirconate glass. In this case, it is desirable that erbium of 2000 ppm is doped.

Also, the amplification medium main line may include erbium doped fluorozirconate glass, the upper laser level may be one of ⁴S_{3/2'} ²H_{11/2} and ⁴F_{7/2} and the lower laser level may be ⁴I_{9/2}.

Also, the amplification medium main line may include erbium doped fluorozirconate glass, the upper laser level may be one of ⁴S_{3/2}, ²H_{11/2} and ⁴F_{7/2} and the lower laser level is ⁴I_{9/2}, and the base level may be ⁴I_{15/2} and the middle level is ⁴I_{11/2}.

Also, the amplification medium main line may include erbium doped fluorozirconate glass, the upper laser level may be one of ⁴S_{3/2}, ²H_{11/2} and ⁴F_{7/2} and the lower laser level may be ⁴I_{9/2}, and the base level may be ⁴I_{15/2}, the first middle level may be ⁴I_{9/2} and the second middle level is ⁴I_{13/2}.

Also, the amplification medium main line may include erbium doped fluorozirconate glass, the upper laser level may be one of ⁴S_{3/2}, ²H_{11/2} and ⁴F_{7/2} and the lower laser level may be ⁴I_{9/2}, and the base level may be ⁴I_{15/2}, and the middle level may be ⁴I_{13/2}.

Also, the laser amplifier may include a plurality of sets, each of which may include the amplification fiber main line, the first light source and the second light source, and an optical isolator provided between two of the sets.

In this case, the laser amplifier may further include: the second light source provided at an end side of the laser amplifier.

Also, the first excitation light and the second excitation light are supplied to the amplification fiber main line via optical couplers, respectively.

Also, the first excitation light and the second excitation light may be supplied to the amplification fiber main line via a dichroic mirror.

Also, the amplified signal light may be outputted from the amplification fiber main line via a mirror partially reflecting the laser light.

Also, the amplified signal light may be outputted from the amplification fiber main line via a collimator lens and a diffraction grating.

### Brief Description of the Drawings

Fig. 1 is a conventional transition diagram showing transition between energy levels;
Fig. 2 is a graph showing the relation of wavelength and light intensity;
Fig. 3 is an optical circuit diagram showing a laser amplifier according to an embodiment of the present invention;
Fig. 4 is a transition diagram showing transition between energy levels in the present invention;
Fig. 5 is a graph showing the relation of wavelength and gain;
Fig. 6 is an optical circuit diagram showing the laser amplifier according to a second embodiment of the present invention;
Fig. 7 is an optical circuit diagram showing the laser amplifier according a third embodiment of the present invention;
Fig. 8 is a graph showing the relation of wavelength and laser intensity;
Fig. 9 is an optical circuit diagram showing the laser amplifier according to a fourth embodiment of the present invention; and
Fig. 10 is a graph showing the relation of wavelength and laser intensity.

### Description of the preferred Embodiments

Hereinafter, a laser amplifier of the present invention will be described in detail with reference to the attached drawings.

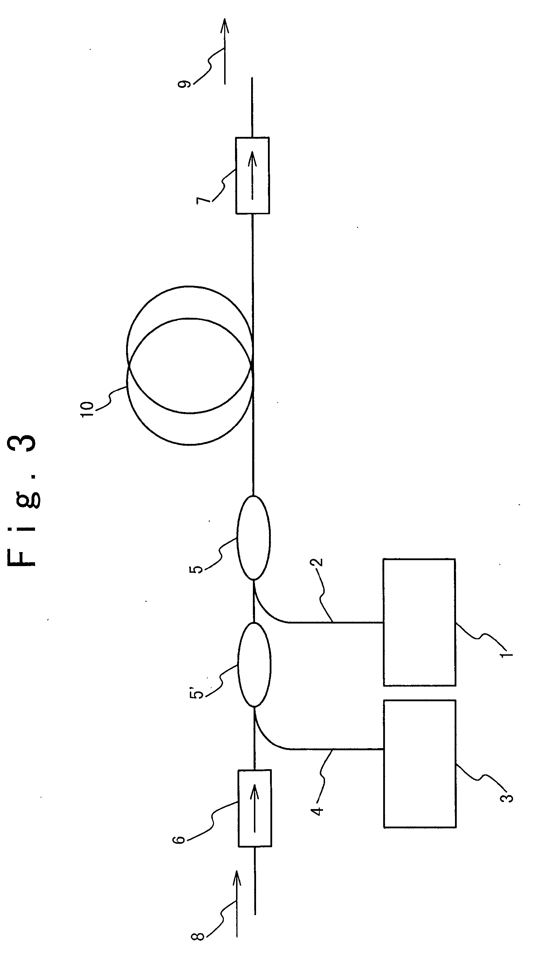

Fig. 3 shows a laser amplifier according to the first embodiment of the present invention. Referring to Fig. 3, a first semiconductor light source 1 and a second semiconductor light source 3 are provided for the laser amplifier. The first semiconductor light source 1 outputs first excitation light 2 and the second semiconductor light source 3 outputs second excitation light 4. The first excitation light 2 is introduced into a light amplification fiber main line 10 through a first optical coupler 5. The second semiconductor light 4 is introduced into the light amplification fiber main line 10 through a second optical coupler 5'. A first optical isolator 6 is provided on the side of a signal input port of the light amplification fiber main line 10. A second optical isolator 7 is provided on the side of a signal output port of the light amplification fiber main line 10. The first optical isolator 6 and the second optical isolator 7 restrain any un-desired laser oscillation due to reflection light, respectively. Input signal light 8 is inputted to the light amplification fiber main line 10 from the side of the input port, and output signal light 9 is outputted from the side of the output port from the light amplification fiber main line 10.

The light amplification fiber main line 10 is formed of fluoride fiber glass to which erbium Er is added, and the laser amplification is carried out therein. For the laser amplification, the transition of electrons from a group of upper laser levels (⁴S_{3/2}, ²H_{11/2}, and so on) to a lower laser level ⁴I_{9/2} is used. It is important that the transition is possible in the band of 1620 to 1720 nm.

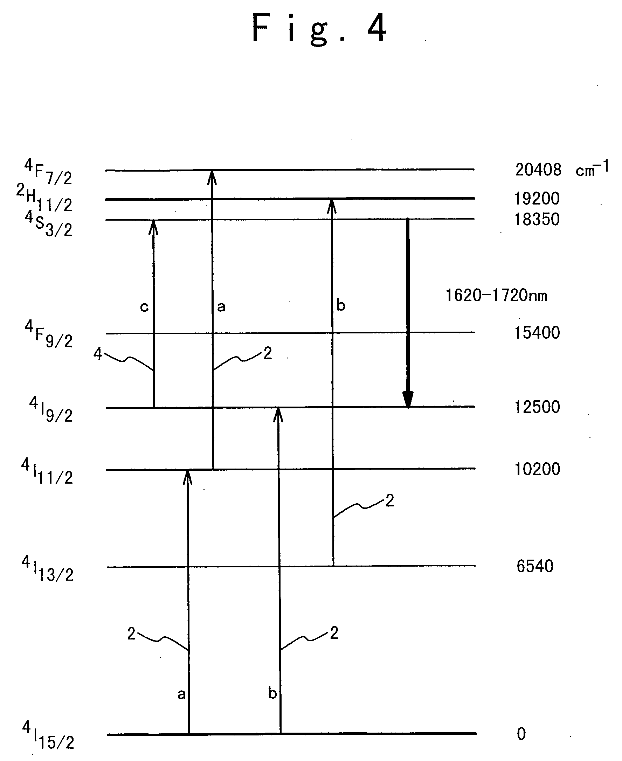

Fig. 4 shows the first excitation light 2 corresponding to transition a and transition b and the second excitation light 4 corresponding to transition c with respect to the energy levels of erbium, as mentioned later in detail. The light amplification fiber main line 10 is formed of fluorozirconate glass as a core. Erbium is added to the fluorozirconate glass by the concentration of 2000 ppm. The core diameter is 4.4 µm and its full length is 10 m.

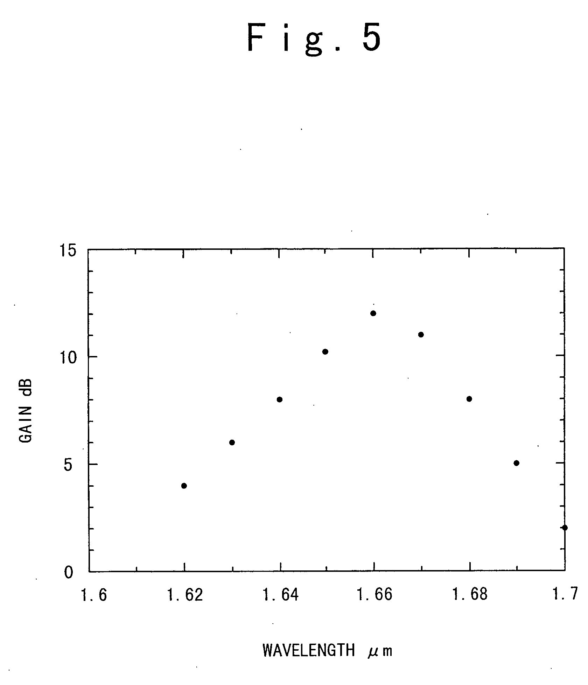

A semiconductor laser with the output of 100 mW is used as the first semiconductor light source 1 and outputs the first excitation light 2 with the wavelength of 0.98 µm. A semiconductor laser with the output of 100 mW is used as the second semiconductor light source 3 and outputs vertical multimode light with the wavelength of 1.58 µm as the second excitation light 4. A variable wavelength semiconductor laser may be used as a signal light source and the wavelength is scanned from 1.61 µm to 1.70 µm in the output of -30 dBm. Fig. 5 shows signal amplification spectrum obtained through the scanning operation.

It was confirmed that the maximum gain of 12 dB was achieved at the wavelength of 1.66 µm, when the power of the first excitation light 2 was 70 mW and the power of the second excitation light 4 was 100 mW. Also, it was confirmed that the positive gain could be obtained in the wavelength region of 1.62 to 1.68 µm. By adjusting the output power of the first light source 1, the control of the gain width is possible. When the transition intensity of the second excitation light 4 relatively weak, the gain width shifts to the side of the longer wavelength. This fact is coincident with the following matter. That is, the lower laser level ⁴I_{9/2} can be assumed to be a virtual base level. Therefore, the level density of the lower laser level ⁴I_{9/2} as an average in the fiber longitudinal direction becomes larger than the level density of the group of upper laser levels (⁴S_{3/2} and ²H_{11/2}) to reduce the inverted population density.

Fig. 4 shows the transition between the levels in the light amplification fiber main line 10 in detail. A 0.98-µm band of 0.97 to 0.985 µm and a 0.8-µm band of 0.78 to 0.81 µm can be used as the wavelength band of the first excitation light source 1, because it is sufficient that electrons are excited to the group of upper laser levels ⁴F_{7/2}, ²H_{11/2} or ⁴S_{3/2b} through the base state absorption and the excitation state absorption. The second upper laser level ²H_{11/2} is higher than the third upper laser level ⁴S_{3/2} by a little bit.

In the 0.98-µm band excitation, electrons are possible to be excited from a base level ⁴I_{15/2} to a first middle level ⁴I_{11/2} through the base state absorption and from the level ⁴I_{11/2} to the level ⁴F_{7/2} through the subsequent excitation state absorption. The electrons excited to the first upper laser level ⁴F_{7/2} transits quickly to the second or third upper laser level ⁴S_{3/2} or ²H_{11/2} by non-radiation relaxation, and the state density in the second or third upper laser level is increased. In the 0.8-µm (1/12500 cm⁻¹) band excitation, the excitation of electrons from the base level ⁴I_{15/2} to the lower laser level ⁴I_{9/2} is possible through the base state absorption, the electrons transit the lower laser level ⁴I_{9/2} to a second middle level ⁴I_{13/2} through the subsequent non-radiation relaxation, and then the electrons are excited from the second middle level ⁴I_{13/2} to the second upper laser level ²H_{11/2} (1/(19200-6540) is roughly 0.8 µm) through further subsequent excitation state absorption. The same exciting operation as described above is possible, if the wavelength of the first excitation light source 1 falls within a 0.98-µm band or a 0.8-µm band. In the excitation in the 0.8-µm band, the excitation width (the wavelength gap width) from the base level ⁴I_{15/2} to the lower laser level ⁴I_{9/2} (0 to 1/12500) and the excitation width from the second middle level ⁴I_{13/2} to the second upper laser level ²H_{11/2} (1/6540 to 1/19200) share the excitation width between the lower laser level ⁴I_{9/2} and the second middle level ⁴I_{13/2} (1/6540 to 1/12500).

The second excitation light source 3 selectively uses the wavelength equivalent to the energy gap between the lower laser level ⁴I_{9/2} and the second or third upper laser level ²H_{11/2} or ⁴S_{3/2}. The transition at that time is shown in Fig. 4 as transition c. The transition c is a relatively wide band, and it is possible to excite electrons with light with the wavelength of 1.45 µm to 1.61 µm. Moreover, when a light source for light with the wavelength shorter than 1.53 µm is used, the excitation from the base level ⁴I_{15/2} to the second middle level ⁴I_{13/2} is caused at the same time. As a result, the induced emission transition from the second middle level ⁴I_{13/2} to the base level ⁴I_{15/2} is caused, to generate amplified spontaneous emission light (ASE) of a 1550 to 1600-nm band. This ASE is further added to the transition c. Thus, the excitation from the lower laser level ⁴I_{9/2} to the third or second upper laser level ⁴S_{3/2} or ²H_{11/2} is realized in a high efficiency. The manufacturing technique of the semiconductor laser is known, which outputs the laser light corresponding to the wavelength band of the first excitation light source 1 and the second excitation light source 3.

The electrons in the base level ⁴I_{15/2} of the ionized atom absorb the first excitation light 2 in the wavelength range of 0.97 to 0.985 µm, are excited and transit to the first middle level ⁴I_{11/2} (Lower side transition a). The electrons in the first middle level ⁴I_{11/2} are further excited by the first excitation light 2 to transit to the third upper laser level ⁴S_{3/2} or the first upper laser level ⁴F_{7/2} (Transition a). The electrons transited to the first upper laser level ⁴F_{7/2} transit to the second upper laser level ²H_{11/2} upper than the third upper laser level ⁴S_{3/2} by a little bit through the non-radiation relaxation. The electrons in the lower laser level ⁴I_{9/2} are excited by the second excitation light 4 in the wavelength range of 1.45 to 1.61 µm, transit to the third upper laser level ⁴S_{3/2} (Transition c). The electrons in the third upper laser level ⁴S_{3/2} or the second upper laser level ²H_{11/2} transit to the lower laser level ⁴I_{9/2} with the induced emission. The wavelength of the induced emission light by the electrons transiting from the third upper laser level ⁴S_{3/2} to the lower laser level ⁴I_{9/2} is calculated as follows, and it is 1.71 µm of 1710 nm (= roughly 1/(18350-12500)). The spectrum of the light by such an emission shifts due to the influence of the optical fiber medium, and actually it is in the wavelength range of 1620 to 1720 nm.

The electrons in the base level ⁴I_{15/2} are excited by the first excitation light 2 in the wavelength range of 0.78 to 0.815 µm and transit (Lower side transition b) to the lower laser level ⁴I_{9/2}. The electrons transited to the lower laser level ⁴I_{9/2} in this way fall to the second middle level ⁴I_{13/2} once, are excited again by the first excitation light 2 and transits to the third upper laser level ⁴S_{3/2} or to the first upper laser level ⁴F_{7/2} (Upper transition b). The electrons transited to the first upper laser level ⁴F_{7/2} transit to the third upper laser level ⁴S_{3/2} through the non-radiation relaxation. The electrons in the lower laser level ⁴I_{9/2} are excited by the second excitation light 4 in the wavelength range of 1.45 to 1.61 µm and transit to the third upper laser level ⁴S_{3/2} (Transition c). The electrons in the third upper laser level ⁴S_{3/2} or the second upper laser level ²H_{11/2} higher than the third upper laser level ⁴S_{3/2} by a little bit carry out induced emission transition to the lower laser level ⁴I_{9/2}. The wavelength of the induced emission light by the electrons transiting from the third upper laser level ⁴S_{3/2} to the lower laser level ⁴I_{9/2} is in a wavelength range of 1620 to 1720 nm, as mentioned above.

Such two types of induced emission are more promoted by the induced emission between the base level ⁴I_{15/2} and the second middle level ⁴I_{13/2}, and it is as described above that the efficiency of the induced emission becomes high. By using the semiconductor laser having such a wavelength, it is possible to continuously induce the laser re-excitation by the induced emission having a target wavelength in the neighborhood of the wavelength of 1.65 µm (1650 nm) through the single stage excitation and the two stage excitation.

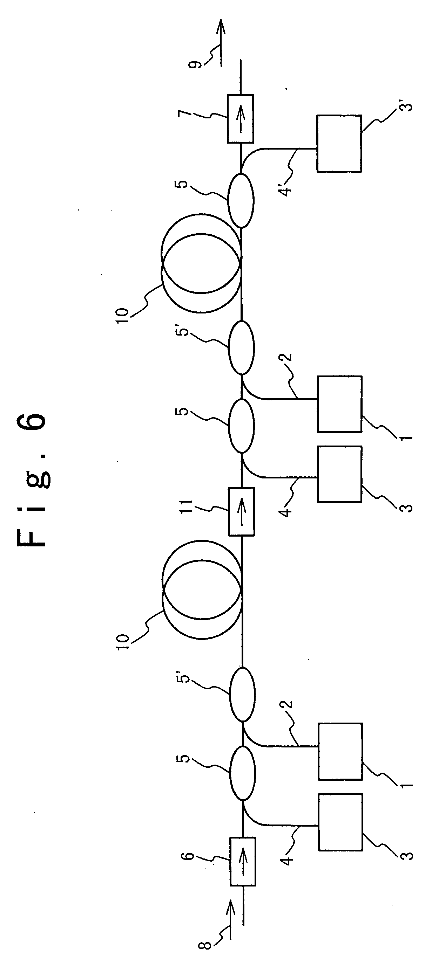

Fig. 6 shows the laser amplifier according to the second embodiment of the present invention. A fiber amplifier of the 2 stages is formed. Two sets of the first semiconductor light source 1 and the second semiconductor light source 3 are used. The first semiconductor light source 1 and the second semiconductor light source 3 in each of the two sets output the first excitation light 2 and the second excitation light 4, respectively. The first excitation light 2 and the second excitation light 4 in the front stage carry out the 2 wavelength front stage excitation in the front stage of the light amplification fiber main line 10. The first excitation light 2 and the second excitation light 4 in the end stage carry out the 2 wavelength end stage excitation in the end stage of the light amplification fiber main line 10. Moreover, another second semiconductor light source 3 is added as the second semiconductor light source 3'. The second excitation light 4' of the second semiconductor light source 3' is incident to the end portion of the light amplification fiber main line 10. Another isolator 11 is interposed in the light amplification fiber main line 10 between the second light coupler 5' of the front-stage and the second excitation light 4 of the end stage. The second excitation light 4' enhances the laser amplification.

The front-stage excitation, the end-stage excitation and the post-end-stage excitation allow high gain and high efficiency amplification, compared with the first embodiment. It was confirmed that it was possible to achieve the gain of 35 dB and the noise figure of 5 dB in the wavelength of 1650 nm. When a saturation signal (10 dBm and the wavelength is 1650 nm) is inputted to the light amplification fiber main line 10 such that the light amplification fiber main line 10 operates in the saturation state, it was confirmed that it was possible to achieve the light/light conversion efficiency of 18% (the value obtained by dividing signal output power by the total excitation power).

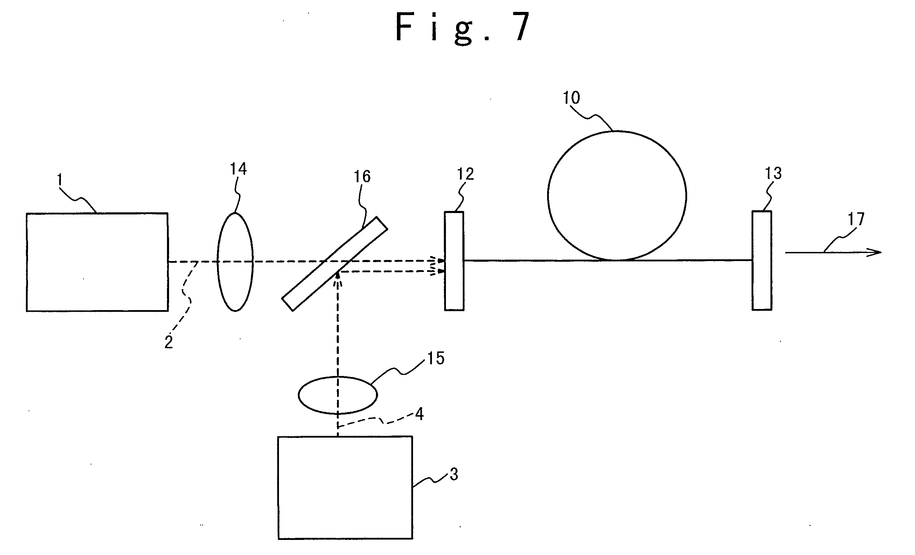

Fig. 7 shows the laser amplifier according to the third embodiment of the present invention. The first semiconductor light source 1 and the second semiconductor light source 3 are used, as described in the above embodiments. A rear mirror 12 is jointed to the one end of the erbium added fiber 10. The rear mirror 12 has optical properties of no reflection to the first excitation light 2 and the second excitation light 4, and full reflection to the wavelength band (1.65µm). An output mirror 13 joins to the other end of the light amplification fiber main line 10. The output mirror 13 has the optical properties of partial reflection in the oscillation wavelength band. The first excitation light 2 and the second excitation light 4 are collected by the first lens 14 and the second lens 15, after being radiated once into the free space. Moreover, the first excitation light 2 transmits a dichroic mirror 16 and the second excitation light 4 is reflected by the dichroic mirror 16. Then, the first excitation light 2 and the second excitation light 4 transmit the rear mirror 12, and are incident to the light amplification fiber main line 10.

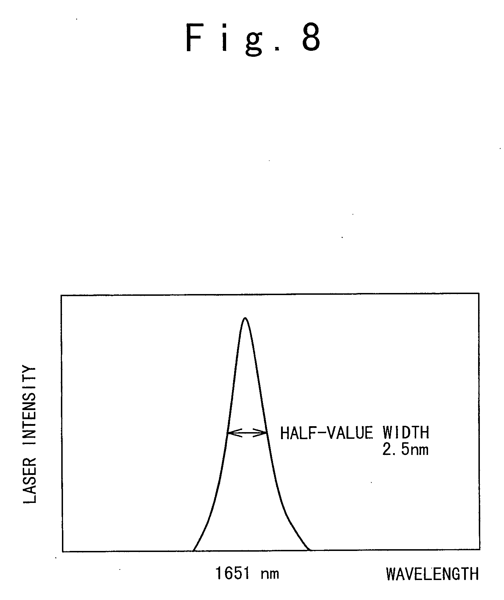

Fig. 8 shows the laser oscillation spectrum of such an optical system. The output light 17 is obtained through laser oscillation (the light amplification) of the half value of about 2.5 nm in the wavelength of 1651 nm, as shown in Fig. 8.

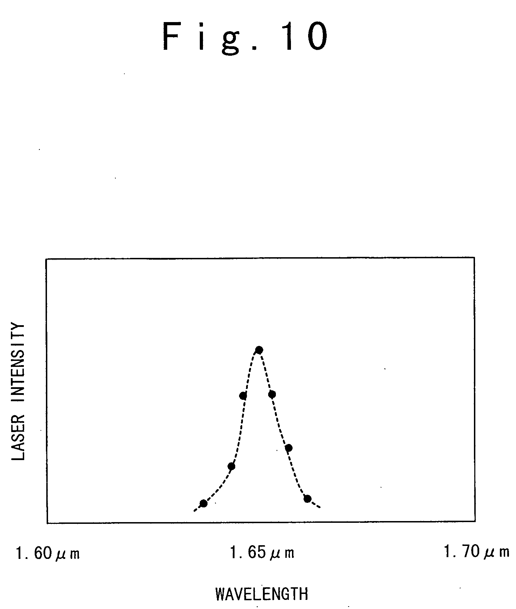

Fig. 9 shows the light amplifier according to the fourth embodiment of the present invention. The output mirror 13 of Fig. 7 is removed, and a collimator lens 18 is used, instead. A diffraction grating 19 is attached to the front of the collimator lens 18. The optical system other than the collimator lens 18 and the diffraction grating 19 is the completely same as it that of Fig. 7. The diffraction grating 19 can selectively vary the wavelength of the output light 21 by the rotating it. Fig. 10 shows the variable wavelength operation of the 1.65 µm neighborhood and shows that the variable width of about 5 nm is realized. Such width depends on the alignment precision of the optical system, and the performance of the diffraction by the diffraction grating 19 mainly can expand more.

In this way, the rare earth kind element, a first excitation light source (the wavelength and the intensity) and a second excitation light source (the wavelength and the intensity) are appropriately selected which can realize desired induced emission transition. In this case, it could be understood that the present invention is effective to the other transition between the excitation levels in the Er ion and to the other rare earth kind ion. The other ion such as thulium (Tm) and holmium (Ho) which has self-terminating-type transition has the degrees of freedom in the excitation light source. Therefore, it is possible to use a semiconductor laser for the excitation.

In the above description, the fluorozirconate glass is used as the core and Er is doped. Otherwise, glass selected from the group consisting of halide oxide glass, halide glass, chalgogenide glass, chalcohalide glass, telluride glass, quartz, fluoride glass can be used. Indium may be doped in the fluoride glass instead of Er.

The light amplifier of the present invention can re-amplify laser, especially, a laser signal stably.

Especially, a semiconductor laser excitation is made possible for the Er addition light amplifier or the laser oscillator. The laser apparatus can be provided to have a high efficiency, smallness, a long lifetime and the stability. Moreover, by adjusting the power ratio of the first excitation light and the second excitation light, it is possible to realize the light amplifier in which a gain peak wavelength is shifted on the side of the longer wave length, and the laser oscillator which an oscillation wavelength is shifted on the side of the long wave can be. Therefore, by connecting the fiber amplifier which a gain peak is not shifted, in series with or in parallel to a shifted fiber amplifier which a gain peak is shifted, or with a conventional EDFA, it is possible to use for the multiple wavelength communication which needs a wide amplification wavelength band.

## Claims

1. A laser amplifier comprising:
an amplification fiber main line (10) which transfers signal light, wherein amplification medium is doped in a core of said amplification fiber main line, and said signal light is amplified with laser light generated in response to transition of electrons from at least an upper laser level to a lower laser level in said amplification medium;
a first light source (1) which generates first excitation light which is supplied to said amplification fiber main line for the amplification of said signal light, said first excitation light being used to excite the electrons from levels lower than said lower laser level to said upper laser level; and
a second light source (3) which generates second excitation light which is supplied to said amplification fiber main line for the amplification of said signal light, said second excitation light being used to excite the electrons from said lower laser level to said upper laser level.

2. The laser amplifier according to claim 1, wherein each of said first light source and said second light source is a semiconductor laser.

3. The laser amplifier according to claim 1 or 2, wherein said first excitation light has energy to excite the electrons from a base level of said lower level to said upper laser level in 2-step transition.

4. The laser amplifier according to claim 3, wherein said 2-step transition comprises:
first step transition between said base level and a middle level which is lower than said lower laser level; and
second step transition between said middle level and said upper laser level.

5. The laser amplifier according to claim 4, wherein said first excitation light has a wavelength in a 0.98-µm band.

6. The laser amplifier according to claim 3, wherein said 2-step transition comprises:
first step transition between said base level and a first middle level lower than said lower laser level;
non-radiation relaxation from said first middle level to a second middle level lower than said first middle level; and
second step transition from said second middle level to said upper laser level.

7. The laser amplifier according to claim 6, wherein said first excitation light has a wavelength in a 0.8-µm band.

8. The laser amplifier according to any one of claims 1 to 7, wherein a wavelength of said second excitation light is in a range of 1.45 µm to 1.61 µm.

9. The laser amplifier according to claim 8, wherein said second excitation light excites electrons from a base level of said lower levels to a middle level of said lower levels, and induced emission from said middle level to said base level enhances said transition of the electrons from said lower laser level to said upper laser level.

10. The laser amplifier according to any of claims 1 to 9, wherein said core of said amplification medium main line is formed of material selected from the group consisting of halide oxide glass, halide glass, chalgogenide glass, chalcohalide glass, telluride glass, quartz, and fluoride glass.

11. The laser amplifier according to claim 10, wherein said core is formed of fluoride glass.

12. The laser amplifier according to claim 11, wherein said amplification medium of a self-terminating-type is selected the group consisting of erbium (Er), indium (In), thulium (Tm) and holmium (Ho).

13. The laser amplifier according to any of claims 1 to 9, wherein said amplification medium main line comprises erbium doped fluorozirconate glass.

14. The laser amplifier according to claim 13, wherein erbium of 2000 ppm is doped.

15. The laser amplifier according to any of claims 1 to 9, wherein said amplification medium main line comprises erbium doped fluorozirconate glass,
said upper laser level is one of ⁴S_{3/2}, ²H_{11/2} and ⁴F_{7/2} and said lower laser level is ⁴I_{9/2}.

16. The laser amplifier according to claim 4 or 5, wherein said amplification medium main line comprises erbium doped fluorozirconate glass,
said upper laser level is one of ⁴S_{3/2}, ²H_{11/2} and ⁴F_{7/2} and said lower laser level is ⁴I_{9/2}, and
said base level is ⁴I_{15/2} and said middle level is ⁴I_{11/2}.

17. The laser amplifier according to claim 6 or 7, wherein said amplification medium main line comprises erbium doped fluorozirconate glass,
said upper laser level is one of ⁴S_{3/2}, ²H_{11/2} and ⁴F_{7/2} and said lower laser level is ⁴I_{9/2}, and
said base level is ⁴I_{15/2}, said first middle level is ⁴I_{9/2} and said second middle level is ⁴I_{13/2}.

18. The laser amplifier according to claim 9, wherein said amplification medium main line comprises erbium doped fluorozirconate glass,
said upper laser level is one of ⁴S_{3/2}, ²H_{11/2} and ⁴F_{7/2} and said lower laser level is ⁴I_{9/2}, and
said base level is ⁴I_{15/2}, and said middle level is ⁴I_{13/2}.

19. The laser amplifier according to any of claim 1 to 18, comprising:
a plurality of sets, each of which comprises said amplification fiber main line, said first light source and said second light source, and
an optical isolator (11) provided between two of said sets.

20. The laser amplifier according to claim 19, further comprising:
said second light source (3') provided at an end side of said laser amplifier.

21. The laser amplifier according to any of claims 1 to 20, wherein said first excitation light and said second excitation light are supplied to said amplification fiber main line via optical couplers (5, 5'), respectively.

22. The laser amplifier according to any of claims 1 to 20, wherein said first excitation light and said second excitation light are supplied to said amplification fiber main line via a dichroic mirror (16).

23. The laser amplifier according to any of claims 1 to 22, wherein said amplified signal light is outputted from said amplification fiber main line via a mirror (13) partially reflecting said laser light.

24. The laser amplifier according to any of claims 1 to 22, wherein said amplified signal light is outputted from said amplification fiber main line via a collimator lens (18) and a diffraction grating (19).
